# EUROPÄISCHE PATENTSCHRIFT

(11) **EP 3 801 941 B1**
(45) Veröffentlichungstag und Bekanntmachung des Hinweises auf die Patenterteilung: **10.08.2022**
(21) Anmeldenummer: 19731898.3
(22) Anmeldetag: 11.06.2019
(51) Int. Cl.: B21C 23/21, B21C 35/04

(54) **STRANGPRESSE MIT ELEKTROHYDROSTATISCHEN STEUERSYSTEM, VERFAHREN UND VERWENDUNG**
EXTRUSION PRESS WITH ELECTRO-HYDROSTATIC CONTROL SYSTEM, METHOD AND USE
PRESSE D'EXTRUSION ÉQUIPÉE D'UN SYSTÈME DE COMMANDE ÉLECTROHYDROSTATIQUE, PROCÉDÉ ET UTILISATION

(30) Priorität: 11.06.2018 DE 102018113910
(43) Veröffentlichungstag der Anmeldung: 14.04.2021
(73) Patentinhaber: MOOG GmbH, 71034 Böblingen (DE)
(72) Erfinder: KIRCH, Klaus, 52080 Aachen (DE)
(74) Vertreter: Wittmann, Ernst-Ulrich
(86) Internationale Anmeldenummer: PCT/EP2019/065187
(87) Internationale Veröffentlichungsnummer: WO 2019/238663

(56) Entgegenhaltungen:
- WO-A1-2018/019622
- US-A1- 2014 096 581

## Beschreibung

Die vorliegende Erfindung betrifft eine Strangpresse mit einem elektrohydrostatischen Steuersystem (siehe z.B. WO2018/019622).

Strangpressen sind im Stand der Technik bekannt. Strangpressen erzeugen mit hohen Kräften von ca. 10 MN bis 150 MN durch Pressen eines Rohlings durch eine Matrize ein kontinuierliches Profil. Die Hauptbewegungen von Strangpressen sind die Bewegung des Presszylinders im Eilgang und im Kraftgang, des Scherwerkzeuges, wie beispielsweise einer Schere zur sauberen Abtrennung des Pressrestes, sowie die Bewegung des Aufnehmers im Eilgang und dem Anpressen des Aufnehmers zum Abdichten der Presskammer nach außen, damit kein Material entweichen kann. Darüber hinaus gibt es noch verschiedene Hilfsfunktionen, wie beispielsweise einen Werkzeugwechsel, die Werkzeugklemmung, der Pressabstreifer, welche eine Bewegung an der Strangpresse verrichten. Nachteilig bei den im Stand der Technik bekannten Strangpressen ist, dass insbesondere die Bewegungen des Presszylinders und des Scherwerkzeugs große Volumenströme erfordern, welche mit großen Pumpleistungen bereitgestellt werden müssen. Diese großen Pumpenvolumenströme bedingen große Ölbehälter mit großen Ölvolumina, beispielsweise im Bereich von 10.000l - 20.000l, mit denen das Hydrauliksystem der Strangpresse versorgt wird. Gemäß dem Stand der Technik beträgt ggf. zudem der Faktor für das benötigte Ölvolumen wenigstens das 3- bis 5-fache der maximalen Gesamtpumpenförderleistung.

Weiterhin nachteilig ist, dass beim Eilgang des Presszylinders, der über Hilfszylinder oder über elektromechanische Antriebssysteme erfolgt, ein noch wesentlich größerer Volumenstrom über ein sogenanntes Füll- oder Umlaufventil gefördert werden muss. Außerdem werden beim sogenannten Stauchen und Dekomprimieren im Vergleich zur installierten Pumpenfördermenge kurzzeitig noch größere Volumenströme benötigt. Aufgrund dieser Bedingungen muss das vorzuhaltende Ölvolumen im Behälter bis auf einen Faktor von ca. dem 5 bis 10-fachen im Verhältnis zur installierten Pumpenfördermenge vorliegen.

Dieses große Ölvolumen wird bei den im Stand der Technik bekannten Strangpressen wegen der erforderlichen Nachsaugung im Eilgang und der günstigeren Ansaugung der Pumpen beispielsweise in 2 bis 3 Metern Höhe über der Strangpresse installiert.

Besonders Weiterentwicklungen der Strangpresse, welche die Nachteile des großen Ölvolumens und der Anordnung des Ölbehälters in einer entsprechend notwendigen Höhe über der Strangpresse vermeiden sollen, gehen von dem Ansatz aus, die im Öl vorhandene Luft, als gelöste oder ungelöste Luft, zu reduzieren.

Mit dem entgasten Öl, dass die Kavitation für das Ansaugen der Pumpen, beim Dekomprimieren und beim Umwälzen des Öls über das Nachsaugventil bei den Eilgängen vermindern soll, kann das Ölvolumen mit dem entgasten Öl im Ölbehälter reduziert werden.

Nachteilig an dem Verfahren ist, dass die Entgasung des Ölvolumens technisch aufwendig ist, hohe Kosten verursacht und im Fehlerfall, bzw. bei Versagen der Entgasung zu Ausfällen und Zerstörung der hydraulischen Bauteile führt.

Die mit der Entgasung des Öls erzielten Verbesserungen gegenüber Strangpressen ohne entgastem Öl, wie beispielsweise, unkritischere Ansaugung der Pumpen, unkritischere Dekompression und unkritischeres Umwälzen des Öls über das Nachsaugventil führen zu zusätzlichen Nachteilen.

Eine Strangpresse unter Verwendung mit entgasten Öl bedarf einer aufwendigen Verrohrung vom Ölbehälter zu den Pumpen, von den Pumpen zu den Hauptfunktionen in der Strangpresse und zusätzlich ist eine aufwendige Tankleitung notwendig, über die das Öl zurück in den Ölvorratsbehälter gefördert wird. Die Dimensionierung der Tankleitungen für die benötigten Volumenströme muss nach den gängigen Kriterien erfolgen, wodurch die Tankleitungen entsprechend groß ausgelegt sein müssen. Diese großen und dementsprechend teuren Leitungen müssen in der Regel an die Aufstellungssituation der Maschine vor Ort angepasst werden. Eine entsprechende Anpassung der Verrohrung bedingt einen hohen Aufwand an Planung, Projektierung und Herstellung und ist somit mit hohen Kosten verbunden.

Zusätzlich ergibt sich die Problematik, dass die Länge der verwendeten Leitungen begrenzt ist, da sich lange Leitungen bei dynamischen Vorgängen, wie beispielsweise bei Strangpressen, als problematisch darstellen und vermieden werden sollten.

Zu den bereits genannten Nachteilen, weisen die im Stand der Technik bekannten Strangpressen den Nachteil auf, dass ein großer Platzbedarf für die Installation des Hydraulikaggregats und die Verrohrung, sowie für das Hydraulikaggregat zu installierenden Umweltschutzmaßnahmen notwendig ist. Eine Installation des Versorgungsaggregats in einem separaten Hydraulikraum bzw. Hydraulikkeller ist entsprechend technisch aufwendiger und verursacht zusätzliche und erhöhte Kosten.

Ausgehend von diesem Stand der Technik, ist es die Aufgabe der vorliegenden Erfindung, die Nachteile des Standes der Technik wenigstens teilweise zu überwinden, bzw. den Stand der Technik zu verbessern.

Die Aufgabe wird durch eine Strangpresse gemäß Anspruch 1 der vorliegenden Erfindung gelöst. Bevorzugte Ausführungsformen und Abwandlungen sind Gegenstand der Unteransprüche.

Eine erfindungsgemäße Strangpresse weist einen Presszylinder auf, wobei der Presszylinder für einen Kraftgang mit einem elektrohydrostatischen Steuersystem angetrieben wird und für einen Eilgang mit einem separaten Antrieb verbunden ist.

In einer Ausführungsform umfasst der Presszylinder eine Kolbenkammer, einen Kolben und eine Kolbenstange, wobei die Kolbenkammerfür den Kraftgang mit dem elektrohydrostatischen Steuersystem und der Kolben für den Eilgang mit dem separaten Antrieb verbunden ist.

Die Strangpresse weist weiterhin einen Hydraulikzylinder mit einer Sperrvorrichtung für den Antrieb eines Scherwerkzeuges auf, wobei der Hydraulikzylinder mit dem elektrohydrostatischen Steuersystem verbunden ist. Die Sperrvorrichtung hält den Antrieb des Scherwerkzeugs in der nicht betätigten Stellung. Durch die Sperrvorrichtung wird somit ein ungewolltes Absinken des schweren Scherwerkzeugs, durch beispielsweise Druckverlust verhindert. Die Sperrvorrichtung kann insbesondere als ein Sperrventil oder als eine Kombination aus Sperrventilen in einer Schaltung verschaltet umgesetzt sein.

Die Bewegung des Presszylinders und des Antriebs des Scherwerkzeuges können über Hydraulikzylinder mit Gleichgangfunktionalität bereitgestellt werden. Gleichgangzylinder weisen allerdings den Nachteil auf, dass diese einen großen Platzbedarf für ihre Bewegung benötigen. Um diesen Nachteil, insbesondere bei Räumlichkeiten mit geringen Platz auszugleichen, wird insbesondere eine Kombination von Differentialzylindern mit gleichen Flächen verwendet, welche eine gleichflächige Funktion entsprechend den Gleichgangzylindern erzeugen.

Unter einem Differentialzylinder wird ein Hydraulikzylinder verstanden, bei dem sich die Zylinderflächen auf der Vorder- und Rückseite des Kolbens unterscheiden. Dabei wird die Seite mit der kleineren Zylinderfläche als Stangenseite bezeichnet, weil auf dieser Seite eine Kolbenstange angeordnet ist. Die Zylinderfläche auf der Stangenseite wird Ringfläche genannt. Die Seite mit der größeren Zylinderfläche eines Differentialzylinders ist die sog. Kolbenseite. An der Kolbenseite ist entweder keine Kolbenstange angeordnet, oder eine Kolbenstange mit einem kleineren Durchmesser als auf der Stangenseite. Die Zylinderfläche auf der Kolbenseite wird Kolbenfläche genannt. Die Funktionalität eines Gleichgangzylinders, wobei die Kolbenstange, je nach Stellung des Zylinders an einer Seite herausfährt, und somit ein erhöhter Platzbedarf gegeben ist, kann durch die Kombination von 2 oder mehr Differentialzylindern erreicht werden.

Die Strangpresse weist weiterhin einen Aufnehmer auf, wobei der Aufnehmer für einen Kraftgang mit einem Hydraulikzylinder und für den Eilgang mit einem weiteren separaten Antrieb verbunden ist. •

Der Aufnehmer in einer Strangpresse sollte insbesondere dazu ausgelegt sein, eine schnelle Bewegung (Eilgang) auszuführen, um neues Material zuzuführen und die Strangpresse wieder zu verschließen. Das Zuführen von neuem Material stellt hierbei im Produktionsprozess eine unproduktive Zeit dar, da insbesondere in dieser Zeit kein Material verarbeitet wird, aber weiterhin Kosten für den Betrieb der Strangpresse anfallen. Durch den Eilgang erfolgt die Öffnungsbewegung und Schließbewegung maximal schneller, wodurch Stillstands Zeiten der Strangpresse reduziert werden können. Nach dem Verschließen muss der Aufnehmer mit hoher Presskraft auf das Werkzeug angepresst werden. Die für das Anpressen notwendige Presskraft wird insbesondere über einen Hydraulikzylinder bereitgestellt, da gerade elektromechanische Antriebssysteme die notwendige Presskraft nicht aufbringen können. Nachteilig ist hierbei, dass bei Hydraulikzylindern, welche die hohen Presskräfte bereitstellen, für schnelle Bewegungen des Hydraulikzylinders große Mengen an Öl in einem großen Volumenstrom zum Erreichen der Bewegung bereitgestellt werden müssen. Damit das Hydrauliksystem auch im Eilgang möglichst gering ausgelegt werden kann, wird eine Kombination eines Hydraulikzylinders und eines elektromechanischen Antriebsystems eingesetzt. Vorteilhafterweise wird während des Eilgangs der Aufnehmer durch das elektromechanische Antriebsystem angetrieben und das Öl durch den Umlauf des Hydraulikzylinders um gefördert. Während des Pressen erfolgt die Versorgung des Aufnehmers demzufolge über ein Hydrauliksystem, wobei kein Ölfluss erfolgt, sondern nur Druck für das Anpressen aufgebaut und aufrechterhalten wird.

Die Strangpresse ist dadurch gekennzeichnet, dass der Presszylinder im Kraftgang und der Hydraulikzylinder für den Antrieb eines Scherwerkzeuges über das gemeinsame elektrohydrostatische Steuersystem (Electro hydrostatic actuation system - EAS) abwechselnd gesteuert werden.

Im Sinne der vorliegenden Erfindung umfasse das EAS wenigstens einen Kompaktantrieb (Electro Hydrostatic Pump Unit - EPU) und einen Steuerblock für das Ansteuern des Kompaktantriebs. Der Kompaktantrieb weist einen Servomotor und eine Pumpe auf. Die EAS wird mittels einer Niederdruckversorgung, als Vorspannung, mit beispielsweise einem Druck von 10 bar, aber mit geringen Volumenstrom versorgt. Die EPU sind drehzahlregelbar. EPU zeichnen sich durch ihre kompakte Bauweise aus. Hierbei ist die Pumpe des Kompaktantriebs sehr nah am Zylinder des Kompaktantriebs positioniert. Bei einer konsequenten Umsetzung der Bewegungen des Presszylinders und des Antriebs des Scherwerkzeugs durch die Verwendung der EAS mit Kompaktantrieben ergibt sich eine Ersparnis in der Auslegung des zur Versorgung benötigten Hydraulikaggregats. Ein Hydraulikaggregat wird für die Versorgung der Kompaktantriebe benötigt, allerdings kann dieses kleiner ausgelegt werden, als dieses bei konventioneller Ansteuerung von Hydraulikzylindern der Fall ist. Dies führt zur Reduzierung der Verrohrung zur Versorgung der einzelnen Komponenten der Strangpresse und somit zu einer Kostenreduzierung.

Ebenso ist es im Sinne der vorliegenden Erfindung, wenn das elektrohydrostatische Steuersystem weitere EPUs umfasst. Die Anzahl der EPUs ist entsprechend der Auslegung und der Verwendung der Strangpresse zu wählen.

Vorteilhafterweise werden der Presszylinder im Kraftgang und der Presszylinder für den Antrieb des Scherwerkzeuges über ein gemeinsames elektrohydrostatisches Steuersystem angetrieben. Die Ansteuerung des Presszylinders und des Antriebs für das Scherwerkzeug erfolgt abwechselnd. Vorteilhafterweise ist die Strangpresse so ausgelegt, dass das Scherwerkzeug als auch der Presszylinder einen gleichen Leistungsbedarf aufweisen, wodurch eine Umschaltung ermöglicht wird und somit für zwei verschiedene Funktionalitäten innerhalb der Strangpresse nur ein elektrohydrostatisches Steuersystem notwendig ist. Durch eine entsprechende Auslegung benötigen sowohl der Presszylinder, als auch das Scherwerkzeug die gleiche Größenordnung an Volumenstrom und Öldruck.

Vorteilhafterweise können auch unterschiedliche Größenordnungen an Volumenstrom und Öldruck durch das elektrohydrostatische Steuersystem bereitgestellt werden. Hierbei richtet sich insbesondere die Auslegung des Volumenstroms und Öldruck nach dem maximalen Bedarf eines der anzusteuernden Komponenten. Weist beispielsweise der Presszylinder einen höheren Bedarf eines Volumenstroms und/oder Öldruck auf, so wird das elektrohydrostatische Steuersystem entsprechend dem Bedarf des Presszylinders ausgelegt. Dieses Vorgehen findet auch Anwendung, wenn der Antrieb des Scherwerkzeugs den höheren Bedarf eines Volumenstroms und/oder Öldrucks aufweist. Eine Anpassung bzw. Auslegung des Volumenstroms und/oder Öldrucks erfolgt über die drehzahlregelbaren EPU.

In einer bevorzugten Ausführungsform ist der separate Antrieb des Eilgang des Presszylinder ein elektromechanischer Antrieb. Ferner ist der separate Antrieb des Eilgang des Aufnehmers ein weiterer elektromechanischer Antrieb.

Elektromechanische Antriebssysteme zeichnen sich durch ihre kompakte Bauweise, sowie geringe Wartungs- und Gesamtkosten und optimierte Energieeffizienz aus. Zudem stellen sie die benötigte schnelle Bewegung des Presszylinders und des Aufnehmers während des Eilgangs bereit. Dies hat den Vorteil das kein hoher Volumenstrom für eine schnelle Bewegung der Hydraulikzylinder notwendig ist. Das Öl in den Hydraulikzylindern des Presszylinders und des Aufnehmers wird durch den Umlauf im Hydraulikzylinder während des Eilgangs um gefördert.

In einer Ausführungsform ist der Presszylinder, der Hydraulikzylinder des Aufnehmers und der Hydraulikzylinder für den Antrieb eines Scherwerkzeuges als Gleichgangzylinder oder aus einer Kombination von Differentialzylindern mit summarisch gleichen Wirkflächen ausgebildet.

In einer Ausführungsform umfasst das elektrohydrostatische Steuersystem wenigstes eine elektrohydrostatische Pumpeneinheit. Die Elektrohydrostatische Pumpeneinheit umfasst einen Servomotor und eine Pumpe und ist als eine Kompaktantrieb ausgebildet.

In einer Ausführungsform wird die elektrohydrostatische Pumpeneinheit über eine Niederdruckversorgung mit einem Druck zwischen 5 bar bis 15 bar, insbesondere 10 bar vorgespannt. Die Niederdruckversorgung stellt die Vorspannung für die im elektrohydrostatischen Steuersystem angetriebenen Kompaktantriebe, als eine interne Versorgung bereit, welche vorteilhafterweise über einen geringen Volumenstrom erfolgt. Das durch die Niederdruckversorgung bereitgestellte Ölvolumen kann somit vorteilhaft von mehreren Tausend Litern, beispielsweise 10.000I bis 20.000I auf mehrere Hundert Liter zur Versorgung der EPU Einheiten reduziert werden.

In einer Ausführungsform umfasst die Niederdruckversorgung insbesondere eine Pumpeneinheit, ein Ölreservoir, einen Speicher und einen Speichersicherheitsblock.

In einer Ausführungsform umfasst die Strangpresse einen zusätzlichen Druckspeicher und ein Hydraulikaggregat, wobei das Hydraulikaggregat einen Druck in dem Druckspeicher bereitstellt und der Druckspeicher über einen Steuerblock mit dem Presszylinder verbunden ist.

Vorteilhafterweise kann durch den gespeicherten Druck in dem Druckspeicher kurzfristig ein großer Volumenstrom erzeugt werden. Hierfür erzeugt ein Hydraulikaggregat, beispielsweise eine kleine Hydraulikpumpe, einen Druck in dem Druckspeicher. Die gespeicherte Energie kann insbesondere für ein schnelles Stauchen verwendet werden. Unter dem Stauchen ist hierbei das Verbinden von Restmaterial mit einem neueingelegten Rohling zu verstehen. Erfolgt das Stauchen mit einer entsprechenden Geschwindigkeit, werden die Materialien gestaucht und es wird eine Verbindung zwischen dem Restmaterial und dem neueingelegten Rohling ausgebildet. Da durch den Vorgang des Stauchens kein Produkt erzeugt wird, sondern vielmehr das Stauchen nur einen nicht vermeidbaren Produktionszwischenschritt darstellt, ist es gewollt, dass dieser so schnell wie möglich durchgeführt wird. Dies erfordert einen entsprechenden Druck und Volumenstrom aus dem Druckspeicher. Diesbezüglich ist die Verwendung von elektromechanische Antriebssystemen ausgeschlossen, da diese die notwendige Kraft nicht aufbringen können.

Vorteilhafterweise kann das schnelle Stauchen, wenn dies in der Strangpresse benötigt wird, durch den Druckspeicher mit Hydraulikaggregat über den Steuerblock, zusätzlich zu dem durch das elektrohydrostatische Steuersystem bereitgestellten Volumenstrom, dem Presszylinder bereitgestellt werden. Der Presszylinder wird vorteilhafterweise über den Steuerblock durch den Druckspeicher und durch die Kompaktantriebe des elektrohydrostatischen Steuersystems parallel versorgt, wodurch ein schnelleres Stauchen, als bei Verwendung ohne den Druckspeicher und Steuerblock erzielt werden kann und somit Prozesszeiten und Produktionskosten reduziert werden.

In einer Ausführungsform ist der Druckspeicher über einen Steuerblock mit dem Hydraulikzylinder des Aufnehmers verbunden. Vorteilhafterweise kann über den Steuerblock der in dem Druckspeicher enthaltene Druck, als Presskraft für das Anpressen des Aufnehmers auf das Presswerkzeug bereitgestellt werden. Für das Anpressen des Aufnehmers an das Presswerkzeug wird eine hohe Presskraft benötigt. Die Presskraft kann durch den Druckspeicher über den Steuerblock bereitgestellt werden. Durch das Anpressen des Aufnehmers wird ein Austreten bzw. ein Herausfließen von Material aus dem Presswerkzeug unterbunden.

Durch die Verwendung des Druckspeichers für das schnelle Stauchen ergibt sich vorteilhafterweise die Möglichkeit, den Druckspeicher entsprechend auch für das Anpressen des Aufnehmers einzusetzen, wodurch ein zusätzliches Hydrauliksystem für den Antrieb des Hydraulikzylinders des Aufnehmers nicht mehr benötigt und somit eingespart wird.

Gemäß einer besonders bevorzugten Ausführungsform ist der Eilgang des Aufnehmers mit einem elektrohydrostatischen Antriebssystem verbunden.

Gemäß einer weiter bevorzugten Ausführungsform ist der Eilgang des Presszylinders mit einem elektrohydrostatischen Antriebssystem verbunden.

Vorteilhafterweise können die Antriebe des Eilgang des Aufnehmers und/oder des Eilgang des Presszylinders durch ein elektrohydrostatisches Antriebssystem angesteuert werden. Diesbezüglich sind der Presszylinder und der Aufnehmer nicht mehr mit elektromechanischen Antriebssystemen, wie beispielsweise mit Servomotoren über Zahnstange und Getriebe verbunden, sondern vielmehr über Hydraulikzylinder, die über ein separates elektrohydrostatisches Steuersystem mit EPU und Steuerblock verfügen. Vorteilhafterweise können das elektrohydrostatische Antriebssystem für den Eilgang des Aufnehmers und den Eilgang des Presszylinders auch über die Niederdruckversorgung des elektrohydrostatischen Steuersystems für den Presszylinder und für den Antrieb des Scherwerkzeugs, als gemeinsame Vorspannung, versorgt werden.

In einer Ausführungsform umfasst das elektrohydrostatische Antriebssystem für den Eilgang des Aufnehmers und für den Eilgang des Presszylinders einen Hydraulikzylinder, ein elektrohydrostatisches Steuersystem und eine elektrohydrostatische Pumpeneinheit.

In einer Ausführungsform ist der Hydraulikzylinder als Gleichgangzylinder oder aus einer Kombination von Differentialzylindern mit summarisch gleichen Wirkflächen ausgebildet.

In einer Ausführungsform wird der Hydraulikzylinder jeweils durch das elektrohydrostatische Steuersystem angesteuert.

In einer Ausführungsform umfasst das elektrohydrostatische Steuersystem wenigstes eine elektrohydrostatische Pumpeneinheit.

In einer Ausführungsform ist das elektrohydrostatische Steuersystem über den Steuerblock mit dem Hydraulikzylinder des Aufnehmers verbunden, der abwechselnd zu dem Eilgang ausgeführt wird. Vorteilhafterweise kann durch die Verbindung des elektrohydrostatischen Steuersystems mit dem Hydraulikzylinder des Aufnehmers, der Aufnehmer angesteuert werden, womit insbesondere der Aufnehmer angepresst werden kann, wenn der Eilgang des Aufnehmers nicht ausgeführt wird.

In einer Ausführungsform ist das elektrohydrostatische Steuersystem mit hydraulischer Nebenfunktion verbunden, die abwechselnd zu dem Eilgang ausgeführt werden. Vorteilhafterweise können somit, wenn der Eilgang des Presszylinders nicht ausgeführt wird, durch das elektrohydrostatische Steuersystem insbesondere Nebenfunktionen der Strangpresse wie beispielsweise Werkzeugverschiebungen und Werkzeugklemmungen ausgeführt oder Klemmeinrichtungen angesteuert werden.

Die vorteilhafte Verwendung von elektrohydrostatischen Steuersystemen gegenüber elektromechanischen Antriebssystemen ergibt sich daraus, dass die Funktionen der elektromechanischen Antriebssysteme durch die feste Positionierung räumlich gebunden sind und somit nicht für ein Umschalten der Funktionalität auf andere Komponenten der Strangpresse geeignet sind. Elektrohydrostatische Steuersysteme ermöglichen durch das hydraulische Umschalten, dass Steuerkapazitäten, wenn diese gerade nicht durch Funktionen der Strangpresse gebunden sind, auch für andere Funktionen innerhalb der Strangpresse verwendet werden können. Hierbei stellen die Eilgänge des Aufnehmers und des Presszylinders die Hauptfunktion dar. Sind beispielsweise die Eilgänge nicht aktiv, können das elektrohydrostatische Steuersystem des Aufnehmers und des Presszylinders zur Ansteuerung für Nebenfunktionen und/oder Hilfsfunktionen verwendet werden.

Nebenfunktionen sind insbesondere das Anpressen des Aufnehmers und Hilfsfunktionen umfassen insbesondere einen Werkzeugwechsel, eine Werkzeugklemmung oder andere Funktionen.

Weiterhin betrifft die vorliegende Erfindung ein Verfahren unter Verwendung der erfinderischen Strangpresse mit den Schritten: Ansteuern (S1) des Kraftgangs eines Presszylinders über ein elektrohydrostatisches Steuersystem, Ansteuern (S2) des Kraftgangs eines Aufnehmers über einen Hydraulikzylinder, Ansteuern (S3) des Eilgang des Presszylinders über einen separaten Antrieb. Der separate Antrieb kann insbesondere ein elektromechanisches Antriebssystem oder ein elektrohydrostatisches Antriebssystem sein. Weiterhin umfassend den Schritt: Ansteuern (S4) des Eilgang des Aufnehmers über einen weiteren separaten Antrieb. Der weitere separate Antrieb kann insbesondere ein elektromechanisches Antriebssystem oder ein elektrohydrostatisches Antriebssystem sein. Weiterhin umfassend den Schritt: Ansteuern (S5) eines Hydraulikzylinders für den Antrieb eines Scherwerkzeuges über das elektrohydrostatische Steuersystem wobei der Schritt des Ansteuerns (S1) des Kraftgangs des Presszylinders und des Ansteuerns (S5) des Hydraulikzylinders für den Antrieb eines Scherwerkzeuges über das gemeinsame elektrohydrostatische Steuersystem abwechselnd erfolgt.

In vorteilhafter Weise kann durch das Verfahren unter Verwendung der erfinderischen Strangpresse, mit dem abwechselnden Ansteuern über das gemeinsame elektrohydrostatische Steuersystem, das notwendige Ölvolumen zur Versorgung des gemeinsamen elektrohydrostatischen Steuersystems von mehreren Tausend Litern, beispielsweise 10.000I bis 20.000I auf mehrere Hundert Liter zur Versorgung der EPU Einheiten reduziert werden. Weiterhin wird die Verrohrung durch die Verwendung einer Niederdruckversorgung im Vergleich zur Verwendung konventioneller Hydrauliksysteme reduziert.

Weiterhin betrifft die vorliegende Erfindung die Verwendung einer Strangpresse für das Herstellen von insbesondere nahtlos gepressten Stäben und/oder Drähten und/oder Rohren und/oder Profilen. Vorteilhafterweise können durch die Strangpresse Stäbe und/oder Drähte und/oder Rohre und/oder Profile aus Materialien ausgewählte aus einer Gruppe umfassend Aluminium, Aluminiumlegierungen, Kupfer, Kupferlegierungen, Magnesiumlegierungen, Stahl sowie anderen Metallen und Legierungen, insbesondere nahtlos hergestellt werden.

Die Erfindung wird nachfolgend anhand verschiedener Ausführungsformen erläutert, wobei darauf hingewiesen wird, dass durch dieses Beispiel Abwandlungen beziehungsweise Ergänzungen, wie sie sich für den Fachmann unmittelbar ergeben, mit umfasst sind. Darüber hinaus stellt dieses bevorzugte Ausführungsbeispiel keine Beschränkung der Erfindung in der Art dar, dass Abwandlungen und Ergänzungen im Umfang der vorliegenden Erfindung liegen.

Dabei zeigen:
- **Fig.1**: eine schematische Darstellung einer Strangpresse mit elektrohydrostatischen Antriebssystem gemäß einer ersten Ausführungsform;
- **Fig. 2**: eine schematische Darstellung einer Strangpresse mit elektrohydrostatischen Antriebssystem gemäß einer zweiten Ausführungsform;
- **Fig. 3**: eine schematische Darstellung einer Strangpresse mit elektrohydrostatischen Antriebssystem gemäß einer dritten Ausführungsform.

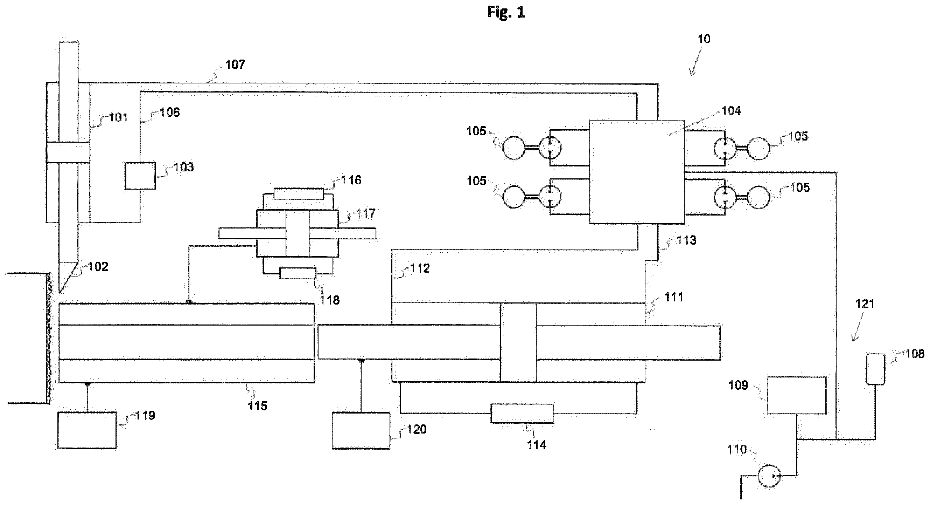

**Fig. 1** zeigt eine schematische Darstellung einer Strangpresse 10 mit elektrohydrostatischen Steuersystem 104 gemäß einer ersten Ausführungsform. Das elektrohydrostatische Steuersystem 104 umfasst wenigstens eine elektrohydrostatisches Pumpeneinheit 105. Insbesondere umfasst das elektrohydrostatische Steuersystem 104 elektrohydrostatische Pumpeneinheiten entsprechend der Anzahl an zu versorgenden Komponenten der Strangpresse 10, 20, 30.

Das elektrohydrostatische Steuersystem 104 wird über die Niederdruckversorgung 121 versorgt. Die Niederdruckversorgung 121 umfasst ein Ölreservoir 108, einen Speichersicherheitsblock 109 und eine Pumpeneinheit 110. Die Niederdruckversorgung 121 stellt die benötigte Vorspannung, mit einem Druck zwischen 5 bar bis 15 bar, insbesondere von 10 bar für die im elektrohydrostatischen Steuersystem angetriebenen elektrohydrostatischen Pumpeneinheiten 105, als eine interne Versorgung bereit, welche vorteilhafterweise über einen geringen Volumenstrom erfolgt.

Die Strangpresse 10 mit elektrohydrostatischen Steuersystem 104 umfasst einen Presszylinder 111. In **Fig. 1****,** **2** **und** **3** ist der Presszylinder 111 als ein Gleichgangzylinder dargestellt. Insbesondere kann der Presszylinder 111 auch als ein Differentialzylinder mit summarisch gleichen Flächen ausgebildet sein. Der Presszylinder 111 ist über die Hydraulikleitungen 112, 113 mit dem elektrohydrostatischen Steuersystem 104 zur Versorgung des Kraftgangs für das Pressen verbunden. Der Eilgang des Presszylinders 111 wird durch das Antriebssystem 120 erzeugt. Insbesondere kann das Antriebssystem 120 ein elektromechanisches Antriebssystem aufweisen, welches über Getriebe und Gestänge mit dem Kolben des Presszylinders 111 verbunden ist. Während des Eilgangs wird das Öl im Presszylinder 111 über den Umlauf 114 um gefördert.

Ferner umfasst die Strangpresse 10 mit elektrohydrostatischen Steuersystem 104 einen Aufnehmer 115. Der Aufnehmer 115 ist für das Pressen an das Werkstück mit einem Hydraulikzylinder 117 mit Steuerblock 116 verbunden. In **Fig. 1****,** **2** **und** **3** ist der Hydraulikzylinder 117 als ein Gleichgangzylinder dargestellt. Insbesondere kann der Hydraulikzylinder 117 auch als ein Differentialzylinder mit summarisch gleichen Flächen ausgebildet sein. Der Hydraulikzylinder 117 wird über ein Hydraulikaggregat (nicht dargestellt) mit Druck zum Anpressen des Aufnehmers 115 an das Werkzeug versorgt. Der Eilgang des Aufnehmers 115 wird durch das Antriebssystem 119 erzeugt. Insbesondere kann das Antriebssystem 119 ein elektromechanisches Antriebssystem aufweisen. Während des Eilgangs wird das Öl im Hydraulikzylinder 117 über den Umlauf 118 um gefördert.

Ferner umfasst die Strangpresse 10 mit elektrohydrostatischen Steuersystem 104 einen Hydraulikzylinder 101 mit Scherwerkzeug 102. In **Fig. 1****,** **2** **und** **3** ist der Hydraulikzylinder 101 als ein Gleichgangzylinder dargestellt. Insbesondere kann der Hydraulikzylinder 101 auch als eine Kombination aus Differentialzylindern mit summarisch gleichen Flächen ausgebildet sein. Der Hydraulikzylinder 101 ist über die Hydraulikleitungen 106, 107 mit dem elektrohydrostatischen Steuersystem 104 verbunden. Das elektrohydrostatische Steuersystem 104 beaufschlagt den Zylinder 101, während des Schneidevorgangs mit Druck, so dass das Scherwerkzeug 102 ein Reststück von dem kontinuierlichen Profil abtrennt. Während des Pressvorgangs durch den Presszylinder 111, wird der Hydraulikzylinder 101 mit dem Scherwerkzeug 102 in einer nicht betätigten Stellung gehalten. Dies erfolgt durch die Sperrvorrichtung 103. Durch die Sperrvorrichtung 103 wird somit ein ungewolltes Absinken des schweren Scherwerkzeugs 102, durch beispielsweise Druckverlust, verhindert. Die Sperrvorrichtung 103 kann als ein Sperrventil oder als eine Kombination aus Sperrventilen in einer Schaltung verschaltet umgesetzt sein.

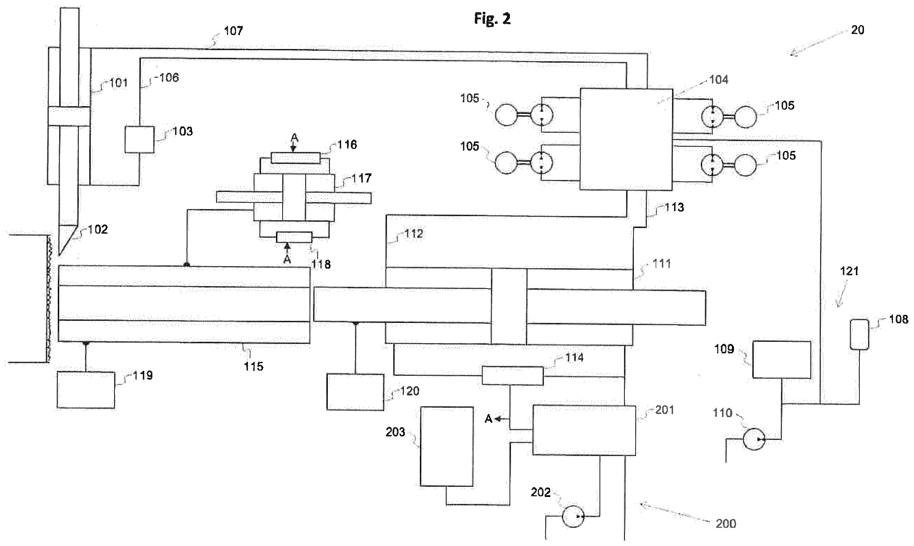

**Fig. 2** zeigt eine schematische Darstellung einer Strangpresse 20 mit elektrohydrostatischen Steuersystem 104 gemäß einer zweiten Ausführungsform. Die Grundfunktion ist dabei dieselbe wie für **Fig. 1** erläutert. Auch bezeichnen dieselben Bezugszeichen dieselben Komponenten wie in bei **Fig. 1**. Die Ausführungsform dargestellt in **Fig. 2** weist aber weitere Komponenten auf, die für bestimmte Einsatzszenarien vorteilhaft sind. So umfasst die Strangpresse 20 mit elektrohydrostatischen Steuersystem 104 ein externes Druckspeichersystem 200. Das externe Druckspeichersystem 200 umfasst einen Steuerblock Akku und Stauchen 201, eine Pumpeneinheit 202 und einen Akku Mitteldruck 203. Über die Pumpeneinheit 202 wird ein Druck bereitgestellt, welcher in dem Akku Mitteldruck 203 gespeichert wird. Der Akku Mitteldruck 203 kann einen Druck von beispielsweise 200 bar bereitstellen. Der Akku Mitteldruck 203 und die Pumpeneinheit 202 sind mit dem Steuerblock Akku und Stauchen 201 verbunden und werden über diesen angesteuert. Der Steuerblock Akku und Stauchen ist mit dem Umlauf 114 der Presszylinders verbunden.

Bei Strangpressen mit verkürzten Zykluszeiten wird für die Funktion des Stauchens und des Dekomprimierens bei denen kurzzeitig große Volumenströme erforderlich sind, ein größeres Hydraulikaggregat inklusive des Druckspeichers für die Erzeugung des Hydraulikdrucks benötigt, dass im Verhältnis zu Strangpressen ohne dem elektrohydrostatisches Steuersystem 104 aber wesentlich kleiner ausgeführt sein kann. Mittels des externen Druckspeichersystems kann kurzfristig ein großer Volumenstrom erzeugt werden, womit ein schnelleres Stauchen, als wie bei der in **Fig. 1** dargestellten Ausführungsform realisiert werden kann. Die in **Fig. 2** dargestellt Ausführungsform der Strangpresse 20 stellt eine Variante der Ausführungsform der Strangpresse 10, dargestellt in **Fig. 1** dar, bei der der Produktionsschritt des Stauchens durch den zusätzlichen Druck des externen Druckspeichersystems 200 schneller ausgeführt und somit die Produktionszeit verkürzt wird. Der Produktionsschritt des Stauchens kann auch bei der Ausführungsform der Strangpresse 10 erfolgen, dargestellt in **Fig. 1**. Dieser verläuft allerdings langsamer, da weniger Volumenstrom zum Stauchen zur Verfügung steht.

Ferner kann das externe Druckspeichersystem 200 über eine Verbindung A mit dem Hydraulikzylinder 117 über den Steuerblock Aufnehmer 116 und dem Umlauf 118 verbunden werden. Die Verbindung A erfolgt insbesondere durch eine Hydraulikleitung. Vorteilhafterweise kann über den Steuerblock Akku und Stauchen 201 die in dem Akku Mitteldruck 203 enthaltene Presskraft, für das Anpressen des Aufnehmers 115 auf das Presswerkzeug notwendige Presskraft bereitgestellt werden. Durch das Anpressen des Aufnehmers 115 wird ein Austreten von Material aus dem Presswerkzeug unterbunden.

Durch die Verwendung des Akku Mitteldruck 203 für das schnelle Stauchen ergibt sich vorteilhafterweise die Möglichkeit, den Akku Mitteldruck 203 entsprechend auch für das Anpressen des Aufnehmers 115 einzusetzen, wodurch ein Hydrauliksystem für den Antrieb des Hydraulikzylinders 117 des Aufnehmers 115 nicht mehr benötigt und somit eingespart wird.

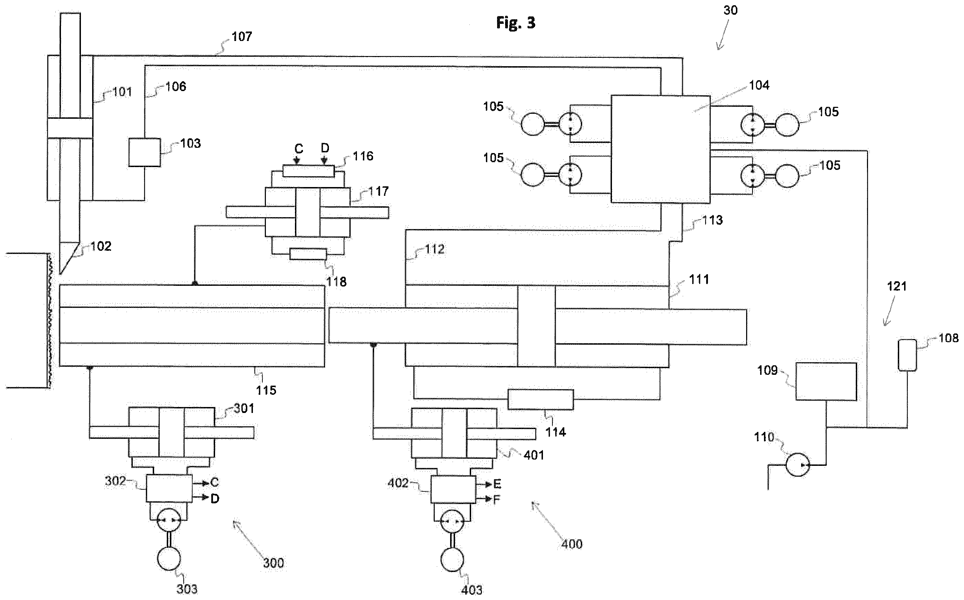

**Fig. 3** zeigt eine schematische Darstellung einer Strangpresse 30 mit elektrohydrostatischen Steuersystem 104 gemäß einer dritten Ausführungsform. Die Grundfunktion ist dabei dieselbe wie für **Fig. 1****.** erläutert. Auch bezeichnen dieselben Bezugszeichen dieselben Komponenten wie in bei **Fig. 1**. Die Ausführungsform dargestellt in **Fig. 3** weist aber im Gegensatz zur **Fig. 1** die elektrohydrostatischen Antriebssysteme 300, 400 auf, welche die elektromechanischen Antriebssysteme 119, 120 der **Fig. 1** ersetzen. Die elektrohydrostatischen Antriebssysteme 300, 400 sind identisch aufgebaut und weisen einen Hydraulikzylinder 301, 401 auf. Das elektrohydrostatische Antriebssystem 300 ist für den Eilgang des Aufnehmers 115 mit dem Aufnehmer 115 verbunden und das elektrohydrostatische Antriebssystem 400 ist für den Eilgang des Presszylinders 111 mit dem Presszylinder 111 verbunden. Die Hydraulikzylinder 301, 401 sind als Gleichgangzylinder dargestellt. Insbesondere kann der Hydraulikzylinder 101 auch als eine Kombination aus Differentialzylindern mit summarisch gleichen Flächen ausgebildet sein.

Ferner umfassen die elektrohydrostatischen Antriebssysteme 300, 400 ein elektrohydrostatisches Steuersystem 302, 402. Das elektrohydrostatische Steuersystem 302 umfasst den Steuerblock Eilgang Aufnehmer 115 und kann über die Verbindung C und D insbesondere mit dem Steuerblock Aufnehmer 116 verbunden werden. Das elektrohydrostatische Steuersystem 402 umfasst den Steuerblock Eilgang Presszylinder 111 und kann über die Verbindung E und F insbesondere mit Hilfsfunktionen oder Nebenfunktionen verbunden werden. Die Verbindungen C, D, E und F erfolgen insbesondere durch eine Hydraulikleitung. Die Bezeichnung der Verbindungen stellt hierbei keine Einschränkung dar. Insbesondere kann auch das elektrohydrostatische Steuersystem 302 Hilfsfunktionen oder Nebenfunktionen versorgen und das elektrohydrostatische Steuersystem 402 mit dem Steuerblock Aufnehmer 116 verbunden werden.

Ferner umfassen die elektrohydrostatischen Antriebssysteme 300, 400 eine elektrohydrostatische Pumpeneinheit 303, 403.

Durch die Versorgung der Eilgänge der Strangpresse über die elektrohydrostatischen Antriebssysteme 300, 400 ergibt sich der Vorteil, dass bei Inaktivität der Eilgänge, die Funktionalität der elektrohydrostatischen Antriebssysteme 300, 400 durch ein hydraulisches Umschalten auch für andere Funktionen verwendet werden kann. In der Konfiguration mit den elektrohydrostatischen Antriebssystemen 300, 400 ergibt sich der Vorteil gegenüber den elektromechanischen Antriebsystemen daraus, dass die elektromechanischen Antriebssysteme räumlich festgebunden sind und nicht zur Umschaltung von Funktionalitäten verwendet werden können.

Die elektrohydrostatischen Antriebssysteme 300, 400 werden insbesondere über die in der Strangpresse 30 vorhandene Niederdruckversorgung 121 zur Ansteuerung des elektrohydrostatischen Steuersystem 104 mitversorgt (nicht dargestellt). Diesbezüglich muss die Niederdruckversorgung 121 entsprechend der anzusteuernden Komponenten ausgelegt werden. Durch die gemeinsame Versorgung des elektrohydrostatischen Steuersystems 104, sowie der elektrohydrostatischen Antriebssysteme 300, 400 über die Niederdruckversorgung 121, wird der Umfang der Hydraulikversorgung sowohl im Bedarf an Verrohrung und der Größe der Aggregate und des Ölreservoirs, als auch im benötigten Ölvolumen gegenüber herkömmlichen Systemen reduziert.

Eine weitere und alternative Ausführungsform zu Fig. 3 ergibt sich durch die Kombination der Zylinder 301 und 117 als Kombination von mehreren Differentialzylindern oder eine in einem Zylindergehäuse integrierte Flächenkombination die in der Summe Ihrer Flächen jeweils einen gleichflächigen Zylinder mit Flächenumschaltung für einen Eilgang- und eine Kraftfunktion ergeben. Diese Zylinderkombination oder die spezielle Zylinderausführung wird durch eine Flächenumschaltung zur Erzeugung der Eilgang- und der Kraftbewegung des Aufnehmers 115 mit dem elektrohydrostatischen Steuersystem 302 303 und / oder 104 angetrieben.

Eine weitere und alternative Ausführungsform zu Fig. 3 sich durch die Kombination der Zylinder 401 und 111 als Kombination von mehreren Differentialzylindern oder eine in einem Zylindergehäuse integrierte Flächenkombination die in der Summe Ihrer Flächen jeweils einen gleichflächigen Zylinder mit Flächenumschaltung für einen Eilgang- und eine Kraftfunktion ergeben. Diese Zylinderkombination oder die spezielle Zylinderausführung wird durch eine Flächenumschaltung zur Erzeugung der Eilgang- und der Kraftbewegung des Presszylinders 111 mit dem elektrohydrostatischen Steuersystem 402 403 und /oder 104 angetrieben.

Ferner kann das in der zweiten Ausführungsform der Strangpresse 20 verwendete externe Druckspeichersystem 200, für ein schnelles Stauchen, auch in der dritten Ausführungsform der Strangpresse 30 integriert werden.

### Bezugszeichenliste

- 10: Strangpresse, Hauptantriebssystem
- 20: Strangpresse, Hauptantriebssystem
- 30: Strangpresse, Hauptantriebssystem
- 101: Hydraulikzylinder
- 102: Scherwerkzeug
- 103: Sperrvorrichtung
- 104: elektrohydrostatisches Steuersystem
- 105: elektrohydrostatische Pumpeneinheit
- 106: Hydraulikleitung
- 107: Hydraulikleitung
- 108: Ölreservoir, Speicher
- 109: Speichersicherheitsblock
- 110: Pumpeneinheit
- 111: Presszylinder
- 112: Hydraulikleitung
- 113: Hydraulikleitung
- 114: Umlauf des Presszylinders
- 115: Aufnehmer
- 116: Steuerblock für Hydraulikzylinder Aufnehmer
- 117: Hydraulikzylinder Aufnehmer
- 118: Umlauf des Hydraulikzylinders des Aufnehmers
- 119: elektromechanisches Antriebssystem
- 120: elektromechanisches Antriebssystem
- 121: Niederdruckversorgung, Vorspannung für EPUs
- 200: externes Druckspeichersystem
- 201: Steuerblock Akku und Stauchen
- 202: Pumpeneinheit
- 203: Akku Mitteldruck
- 300: elektrohydrostatisches Antriebssystem Aufnehmer Eilgang
- 301: Hydraulikzylinder Aufnehmer Eilgang
- 302: Steuerblock Eilgang Aufnehmer
- 303: elektrohydrostatische Pumpeneinheit
- 400: elektrohydrostatisches Antriebsystem Presszylinder Eilgang
- 401: Hydraulikzylinder Presszylinder Eilgang
- 402: Steuerblock Eilgang Presszylinder
- 403: elektrohydrostatische Pumpeneinheit
- A: Hydraulikverbindung
- C, D: Hydraulikverbindung
- E, F: Hydraulikverbindung

## Patentansprüche

1. Strangpresse (10, 20, 30) umfassend:
einen Presszylinder (111), wobei der Presszylinder (111) für einen Kraftgang mit einem elektrohydrostatischen Steuersystem (104) angetrieben wird und für einen Eilgang mit einem separaten Antrieb (120, 400) verbunden ist,
einen Aufnehmer (115), wobei der Aufnehmer (115) für einen Kraftgang mit einem Hydraulikzylinder (117) und für den Eilgang mit einem weiteren separaten Antrieb (119, 300) verbunden ist,
einen Hydraulikzylinder (101) mit einer Sperrvorrichtung (103) für den Antrieb eines Scherwerkzeuges (102), wobei der Hydraulikzylinder (101) mit dem elektrohydrostatischen Steuersystem (104) verbunden ist
**dadurch gekennzeichnet, dass**
der Presszylinder (111) im Kraftgang und der Hydraulikzylinder (101) für den Antrieb eines Scherwerkzeuges (102) über das gemeinsame elektrohydrostatische Steuersystem (104) abwechselnd gesteuert werden.

2. Strangpresse (10, 20, 30) nach Anspruch 1, **dadurch gekennzeichnet, dass** der separate Antrieb des Eilgangs des Presszylinder (111) ein elektromechanisches Antriebssystem (120) ist.

3. Strangpresse (10, 20, 30) nach Anspruch 1, **dadurch gekennzeichnet, dass** der separate Antrieb des Eilgangs des Aufnehmers (115) ein weiteres elektromechanisches Antriebssystem (119) ist.

4. Strangpresse (10, 20, 30) nach einem der vorhergehenden Ansprüche, **dadurch gekennzeichnet, dass** der Presszylinder (111), der Hydraulikzylinder (117) des Aufnehmers (115) und der Hydraulikzylinder (101) für den Antrieb eines Scherwerkzeuges (102) als Gleichgangzylinder oder aus einer Kombination von Differentialzylindern mit summarisch gleichen Wirkflächen ausgebildet ist.

5. Strangpresse (10, 20, 30) nach Anspruch 1, **dadurch gekennzeichnet, dass** das elektrohydrostatische Steuersystem (104) wenigstes eine elektrohydrostatische Pumpeneinheit (105) umfasst.

6. Strangpresse (10, 20, 30) nach Anspruch 5, **dadurch gekennzeichnet, dass** die elektrohydrostatische Pumpeneinheit (105) über eine Niederdruckversorgung (121) mit einem Druck zwischen 5 bar bis 15 bar insbesondere 10 bar vorgespannt wird.

7. Strangpresse (10, 20, 30) nach Anspruch 6, **dadurch gekennzeichnet, dass** die Niederdruckversorgung (121) eine Pumpeneinheit (110), ein Ölreservoir (108) und einen Speichersicherheitsblock (109) umfasst.

8. Strangpresse (10, 20, 30) nach einem der vorhergehenden Ansprüche, **dadurch gekennzeichnet, dass** die Strangpresse (10, 20, 30) einen Druckspeicher (203), ein Hydraulikaggregat (202) umfasst, wobei das Hydraulikaggregat (202) einen Druck in dem Druckspeicher (203) bereitstellt und der Druckspeicher (203) über einen Steuerblock (201) mit dem Presszylinder (111) verbunden ist.

9. Strangpresse (10, 20, 30) nach Anspruch 8, **dadurch gekennzeichnet, dass** der Druckspeicher (203) über einen Steuerblock (201) mit dem Hydraulikzylinder (117) des Aufnehmers (115) verbunden ist.

10. Strangpresse (10, 20, 30) nach Anspruch 1, **dadurch gekennzeichnet, dass** der Eilgang des Aufnehmers (115) mit einem elektrohydrostatischen Antriebssystem (300) verbunden ist.

11. Strangpresse (10, 20, 30) nach Anspruch 1, **dadurch gekennzeichnet, dass** der Eilgang des Presszylinders (111) mit einem elektrohydrostatischen Antriebssystem (400) verbunden ist.

12. Strangpresse (10, 20, 30) nach Anspruch 10 oder 11, **dadurch gekennzeichnet, dass** das jeweilige elektrohydrostatische Antriebssystem (300, 400) einen jeweiligen Hydraulikzylinder für den Eilgang (301, 401), ein jeweiliges elektrohydrostatisches Steuersystem (302, 402) und eine jeweilige elektrohydrostatische Pumpeneinheit (303, 403) umfasst.

13. Strangpresse (10, 20, 30) nach Anspruch 12, **dadurch gekennzeichnet, dass** der jeweilige Hydraulikzylinder (301, 401) für den Eilgang als Gleichgangzylinder oder aus einer Kombination von Differentialzylindern mit summarisch gleichen Wirkflächen ausgebildet ist.

14. Verfahren unter Verwendung einer Strangpresse (10, 20, 30) nach einem der vorangehenden Ansprüche mit den folgenden Schritten:
• Ansteuern (S1) des Kraftgangs eines Presszylinders (111) über ein elektrohydrostatisches Steuersystem (104);
• Ansteuern (S2) des Kraftgangs eines Aufnehmers (115) über einen Hydraulikzylinder (117);
• Ansteuern (S3) des Eilgang des Presszylinders (111) über einen separaten Antrieb (120, 400);
• Ansteuern (S4) des Eilgang des Aufnehmers (115) über einen weiteren separaten Antrieb (119, 300);
• Ansteuern (S5) eines Hydraulikzylinders (101) mit einer Sperrvorrichtung (103) für den Antrieb eines Scherwerkzeuges (102) über das elektrohydrostatische Steuersystem (104), **dadurch gekennzeichnet, dass** das Ansteuern (S1) des Kraftgangs des Presszylinders (111) und das Ansteuern (S5) des Hydraulikzylinders (101) für den Antrieb eines Scherwerkzeuges (102) über das gemeinsame elektrohydrostatische Steuersystem (104) abwechselnd erfolgt.

15. Verwendung einer Strangpresse (10, 20, 30) nach einem der Ansprüche 1 bis 13 zur Herstellung von Stäben und/oder Drähten und/oder Rohren und/oder Profilen.

## Claims

1. Extrusion press (10, 20, 30) comprising:
a press cylinder (111), wherein the press cylinder (111) is driven by an electro-hydrostatic control system (104) for a power traverse and is connected to a separate drive (120, 400) for a rapid traverse,
a transducer (115), wherein the transducer (115) is connected to a hydraulic cylinder (117) for a power traverse and to a further separate drive (119, 300) for the rapid traverse,
a hydraulic cylinder (101) having a locking device (103) for driving a shearing tool (102), wherein the hydraulic cylinder (101) is connected to the electro-hydrostatic control system (104),
**characterized in that**
the press cylinder (111) in power traverse and the hydraulic cylinder (101) for driving a shearing tool (102) are alternately controlled via the common electro-hydrostatic control system (104).

2. Extrusion press (10, 20, 30) according to Claim 1, **characterized in that** the separate drive of the rapid traverse of the press cylinder (111) is an electromechanical drive system (120).

3. Extrusion press (10, 20, 30) according to Claim 1, **characterized in that** the separate drive of the rapid traverse of the transducer (115) is a further electromechanical drive system (119).

4. Extrusion press (10, 20, 30) according to any one of the preceding claims, **characterized in that** the press cylinder (111), the hydraulic cylinder (117) of the transducer (115), and the hydraulic cylinder (101) for driving a shearing tool (102) are designed as synchronous cylinders, or as a combination of differential cylinders with collectively identical effective areas.

5. Extrusion press (10, 20, 30) according to Claim 1, **characterized in that** the electro-hydrostatic control system (104) comprises at least one electro-hydrostatic pump unit (105).

6. Extrusion press (10, 20, 30) according to Claim 5, **characterized in that** the electro-hydrostatic pump unit (105) is preloaded with a pressure between 5 bar and 15 bar, in particular 10 bar, via a low-pressure supply (121).

7. Extrusion press (10, 20, 30) according to Claim 6, **characterized in that** the low-pressure supply (121) comprises a pump unit (110), an oil reservoir (108), and an accumulator safety block (109).

8. Extrusion press (10, 20, 30) according to any one of the preceding claims, **characterized in that** the extrusion press (10, 20, 30) comprises a pressure accumulator (203), a hydraulic unit (202), wherein the hydraulic unit (202) provides a pressure in the pressure accumulator (203) and the pressure accumulator (203) is connected to the press cylinder (111) via a control block (201).

9. Extrusion press (10, 20, 30) according to Claim 8, **characterized in that** the pressure accumulator (203) is connected to the hydraulic cylinder (117) of the transducer (115) via a control block (201).

10. Extrusion press (10, 20, 30) according to Claim 1, **characterized in that** the rapid traverse of the transducer (115) is connected to an electro-hydrostatic drive system (300).

11. Extrusion press (10, 20, 30) according to Claim 1, **characterized in that** the rapid traverse of the press cylinder (111) is connected to an electro-hydrostatic drive system (400).

12. Extrusion press (10, 20, 30) according to Claims 10 or 11, **characterized in that** the respective electro-hydrostatic drive system (300, 400) comprises a respective hydraulic cylinder for the rapid traverse (301, 401), a respective electro-hydrostatic control system (302, 402), and a respective electro-hydrostatic pump unit (303, 403).

13. Extrusion press (10, 20, 30) according to Claim 12, **characterized in that** the hydraulic cylinder (301, 401) is designed as a synchronous cylinder or as a combination of differential cylinders with collectively identical effective areas.

14. Method using an extrusion press (10, 20, 30) according to any one of the preceding claims, comprising the following steps:
• controlling (S1) the power traverse of a press cylinder (111) via an electro-hydrostatic control system (104);
• controlling (S2) the power traverse of a transducer (115) via a hydraulic cylinder (117);
• controlling (S3) the rapid traverse of the press cylinder (111) via a separate drive (120, 400);
• controlling (S4) the rapid traverse of the transducer (115) via a further separate drive (119, 300);
• controlling (S5) a hydraulic cylinder (101) with a locking device (103) for driving a shearing tool (102) via the electro-hydrostatic control system (104),
**characterized in that**
control (S1) of the power traverse of the press cylinder (111) and control (S5) of the hydraulic cylinder (101) for driving a shearing tool (102) take place alternately via the common electro-hydrostatic control system (104).

15. Use of an extrusion press (10, 20, 30) according to any one of Claims 1 to 13 for the production of rods and/or wires and/or tubes and/or profiles.

## Revendications

1. Presse d'extrusion (10, 20, 30) comprenant :
un cylindre de presse (111), le cylindre de presse (111) étant entraîné pour une course de force au moyen d'un système de commande électrohydrostatique (104) et étant connecté pour une course rapide à un entraînement (120, 400) séparé,
un capteur (115), le capteur (115) étant connecté pour la course de force à un cylindre hydraulique (117) pour la course rapide à un autre entraînement (119, 300) séparé,
un cylindre hydraulique (101) comprenant un dispositif de verrouillage (103) pour l'entraînement d'un outil de cisaillement (102), le cylindre hydraulique (102) étant connecté au système de commande électrohydrostatique (104)
**caractérisée en ce que**
le cylindre de presse (111), dans la course de force, et le cylindre hydraulique (101), pour l'entraînement d'un outil de cisaillement (102), sont commandés en alternance par le système de commande électrohydrostatique (104) commun.

2. Presse d'extrusion (10, 20, 30) selon la revendication 1, **caractérisée en ce que** l'entraînement séparé de la course rapide du cylindre de presse (111) est un système d'entraînement électromécanique (120).

3. Presse d'extrusion (10, 20, 30) selon la revendication 1, **caractérisée en ce que** l'entraînement séparé de la course rapide du capteur (115) est un autre système d'entraînement électromécanique (119).

4. Presse d'extrusion (10, 20, 30) selon l'une quelconque des revendications précédentes, **caractérisée en ce que** le cylindre de presse (111), le cylindre hydraulique (117) du capteur (115) et le cylindre hydraulique (101) pour l'entraînement d'un outil de cisaillement (102) sont conçus comme des vérins synchrones ou à partir d'une combinaison de vérins différentiels à surfaces actives sommairement égales.

5. Presse d'extrusion (10, 20, 30) selon la revendication 1, **caractérisée en ce que** le système de commande électrohydrostatique (104) comprend au moins une unité de pompage électrohydrostatique (105).

6. Presse d'extrusion (10, 20, 30) selon la revendication 5, **caractérisée en ce que** l'unité de pompage électrohydrostatique (105) est précontrainte avec une pression entre 5 bar et 15 bar, en particulier 10 bar, à travers une alimentation en basse pression (121).

7. Presse d'extrusion (10, 20, 30) selon la revendication 6, **caractérisée en ce que** l'alimentation en pression basse (121) comprend une unité de pompage (110), un réservoir d'huile (108) et un bloc de sécurité d'accumulateur (109).

8. Presse d'extrusion (10, 20, 30) selon l'une quelconque des revendications précédentes, **caractérisée en ce que** la presse d'extrusion (10, 20, 30) comprend un accumulateur de pression (203), un groupe hydraulique (202), le groupe hydraulique (202) fournissant une pression dans l'accumulateur de pression (203) et l'accumulateur de pression (203) étant connecté au cylindre de presse (111) à travers un bloc de commande (201).

9. Presse d'extrusion (10, 20, 30) selon la revendication 8, **caractérisée en ce que** l'accumulateur de pression (203) est connecté au cylindre hydraulique (117) du capteur (115) à travers un bloc de commande (201).

10. Presse d'extrusion (10, 20, 30) selon la revendication 1, **caractérisée en ce que** la course rapide du capteur (115) est un autre système d'entraînement électromécanique (300).

11. Presse d'extrusion (10, 20, 30) selon la revendication 1, **caractérisée en ce que** la course rapide du capteur (111) est un autre système d'entraînement électromécanique (400).

12. Presse d'extrusion (10, 20, 30) selon la revendication 10 ou 11, **caractérisée en ce que** le système d'entraînement électrohydrostatique (300, 400) respectif comprend un cylindre hydraulique respectif pour la course rapide (301, 401), un système de commande électrohydrostatique (302, 402) respectif et une unité de pompage électrohydrostatique (303, 403) respective.

13. Presse d'extrusion (10, 20, 30) selon la revendication 12, **caractérisée en ce que** le cylindre hydraulique (301, 401) respectif pour la course rapide est conçu comme un vérin synchrone ou à partir d'une combinaison de vérins différentiels à surfaces actives sommairement égales.

14. Procédé utilisant une presse d'extrusion (10 20, 30) selon l'une quelconque des revendications précédentes comprenant les étapes suivantes :
• commande (S1) de la course de force d'un cylindre de presse (111) à travers un système de commande électrohydrostatique (104) ;
• commande (S2) de la course de force d'un capteur (115) à travers un cylindre hydraulique (117) ;
• commande (S3) de la course rapide du cylindre de presse (111) à travers un entraînement séparé (120, 400) ;
• commande (S4) de la course rapide du capteur (115) à travers un autre entraînement séparé (119, 300) ;
• commande (S5) d'un cylindre hydraulique (101) comprenant un dispositif de verrouillage (103) pour l'entraînement d'un outil de cisaillement (102) à travers le système de commande électrohydrostatique (104),
**caractérisée en ce que**
la commande (S1) de la course de force du cylindre de presse (111) et la commande (S5) du cylindre hydraulique (101) pour l'entraînement d'un outil de cisaillement (102) sont effectuées en alternance à travers le système de commande électrohydrostatique (104) commun.

15. Utilisation d'une presse d'extrusion (10, 20, 30) selon l'une quelconque des revendications 1 à 13 pour la fabrication de barres et/ou de fils et/ou de tubes et/ou de profilés.
